# EUROPEAN PATENT APPLICATION

(11) **EP 4 360 798 A1**
(43) Date of publication of application: **01.05.2024**
(21) Application number: 22836569.8
(22) Date of filing: 26.04.2022
(51) Int. Cl.: B23K 26/066

(54) **WELDING APPARATUS AND WELDING METHOD USING SAME**

(30) Priority: 09.07.2021 CN 202110779880
(71) Applicant: HCP Technology Co., Ltd., Guangdong 523000 (CN)
(72) Inventor: ZHUANG, Wenrong, Dongguan, Guangdong 523000 (CN); SUN, Ming, Dongguan, Guangdong 523000 (CN); LU, Jingquan, Dongguan, Guangdong 523000 (CN)
(74) Representative: Notaro, Giancarlo
(86) International application number: PCT/CN2022/089136
(87) International publication number: WO 2023/279810

(57) **Abstract**

A soldering apparatus and a soldering method using the same are provided. The soldering apparatus includes a light source (10) configured to supply light radiation required for soldering; and a mask (30) disposed on the light path of the light source (10) and including a light-shielding portion (31) and multiple light-transmissive portions (32). The multiple light-transmissive portions (32) are spaced apart by the light-shielding portion (31) and are configured for the light radiation to pass through. The mask (30) has different transmittances so that the magnitude of the light power irradiated on a substrate (40) can be controlled. Therefore, devices can not only be soldered in batches but also be prevented from being damaged caused by inconsistent requirements on light powers.

## Description

This application claims priority to Chinese Patent Application No. 202110779880.7 filed on Jul. 9, 2021, the disclosure of which is incorporated herein by reference in its entirety.

### TECHNICAL FIELD

The present application relates to the technical field of soldering, for example, to a soldering apparatus and a soldering method using the soldering apparatus.

### BACKGROUND

With the continuous development of society and the vigorous advocacy of the country, the light-emitting diode (LED) industry has become one of the most active industries nowadays, and LED display screen products have gradually entered multiple fields of social life. Meanwhile, with the innovation and development of LED display screen technology, a small-pitch seamlessly spliced LED display screen with high resolution per unit area has become the mainstream product of the LED display screens. This LED display screen may not only display graphic images and videos that have higher definition but also display more videos and image pictures, especially for its application in image splicing, seamless and random large-area splicing can be realized. In the related art, each display screen is spliced by multiple display boxes, and each display box is spliced by multiple display modules. Multiple pixels for displaying an image are soldered on each display module (each pixel includes three R/G/B chips).

After chips are massively transferred to a substrate, it is required to perform welding and die-bonding for the chips (electrical connections of chip electrodes to pad electrodes). In the related art, it is necessary to solder the chips one by one in soldering, and then transfer to a next working procedure after the soldering of all the chips is completed, so the soldering efficiency is relatively low. Moreover, since the power required for soldering a red-light chip is slightly lower than the power required for soldering a blue-light chip or a green-light chip (the structure of a red-light flip chip is different from the structures of a blue-light flip chip and a green-light flip chip), it is difficult to continuously and quickly adjust the laser output power while in massively soldering, which is prone to cause damage to the red-light chips.

### SUMMARY

The present application provides a soldering apparatus and a soldering method using the soldering apparatus so that the technical problems of relatively low soldering efficiency and being apt to cause damage to red-light chips in soldering can be solved.

An embodiment of the present application provides a soldering apparatus. The soldering apparatus includes a light source configured to supply light radiation required for soldering; and a mask disposed on a light path of the light source and including a light-shielding portion and multiple light-transmissive portions. The multiple light-transmissive portions are spaced apart by the light-shielding portion and are configured for the light radiation to pass through.

An embodiment of the present application provides a soldering method using the soldering apparatus described above. The method includes the following steps. To-be-soldered devices are aligned with multiple light-transmissive portions of a mask respectively. Light radiation emitted by a light source is made transmit the multiple light-transmissive portions to solder the to-be-soldered devices in batch.

### BRIEF DESCRIPTION OF DRAWINGS

FIG. 1 is a diagram illustrating the structure of a soldering apparatus according to an embodiment of the present application;
FIG. 2 is a top view of a mask in FIG. 1;
FIG. 3 is a top view of a substrate in FIG. 1; and
FIG. 4 is a flowchart of a soldering method according to an embodiment of the present application.

### Reference list

- 10: light source
- 20: reflective mirror
- 30: mask
- 31: light-shielding portion
- 32: light-transmissive portion
- 33: first light-transmissive sub-portion
- 34: second light-transmissive sub-portion
- 35: third light-transmissive sub-portion
- 40: substrate
- 41: LED chip
- 42: red-light chip
- 43: green-light chip
- 44: blue-light chip
- 50: movable platform

### DETAILED DESCRIPTION

### Embodiment one

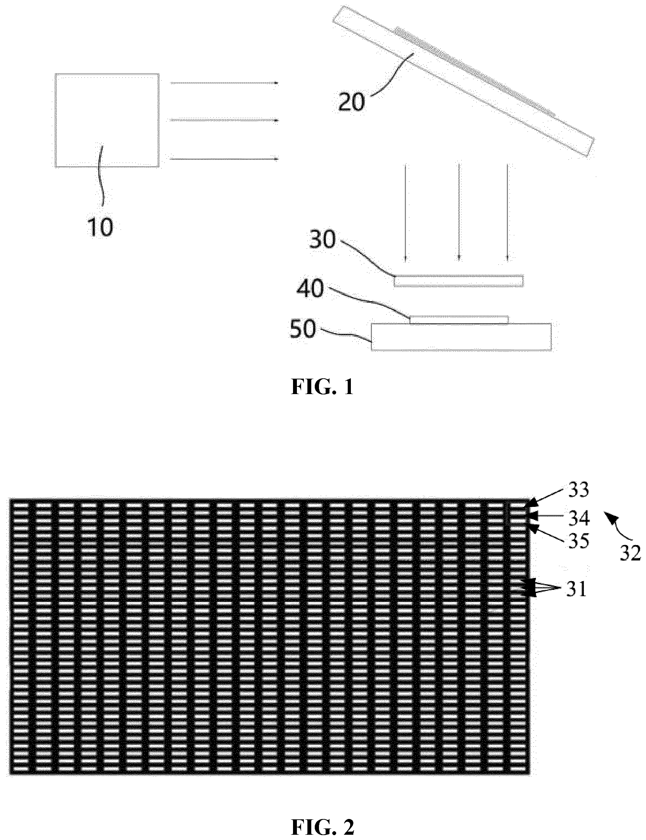

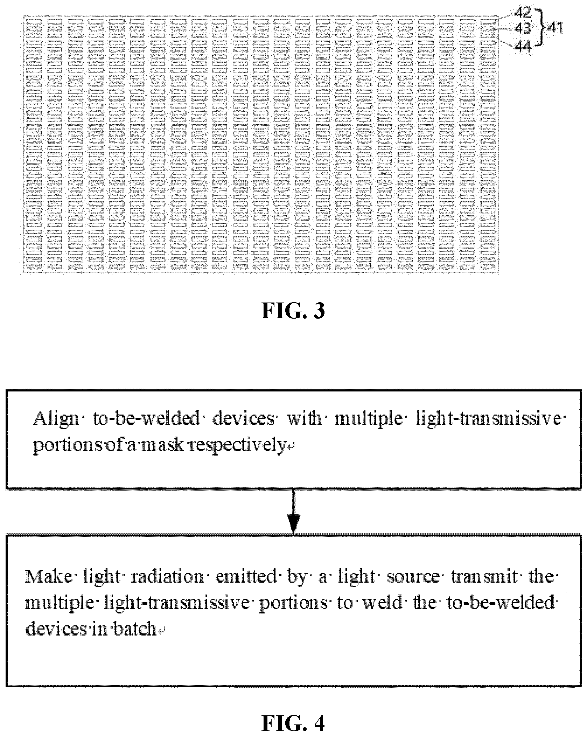

As shown in FIG. 1, this embodiment provides a soldering apparatus that is capable of soldering devices in batch and especially applicable to batch soldering of LED chips 41 (as shown in FIG. 3) massively transferred to a substrate 40 to improve the soldering efficiency.

In an embodiment, the soldering apparatus includes a light source 10 and a mask 30. The light source 10 is configured to supply light radiation required for soldering. The mask 30 is disposed on the light path of the light source 10. The mask 30 includes a light-shielding portion 31 and multiple light-transmissive portions 32. As shown in FIG. 2, the light radiation is laser.

The light-shielding portion 31 is opaque, and the multiple light-transmissive portions 32 are spaced apart by the light-shielding portion 31 and are configured for the laser to pass through to solder the devices in batch. In an embodiment, the devices are the LED chips 41, as shown in FIG. 3.

In an embodiment, the laser emitted by the light source 10 is reflected to the mask 30 by a reflective mirror 20.

In this embodiment, the multiple light-transmissive portions 32 spaced apart are provided, and the LED chips 41 on the substrate 40 are aligned with the multiple light-transmissive portions 32 respectively, thereby facilitating batch soldering by the laser and improving the soldering efficiency.

In an embodiment, the light source 10 may be a point light source, and multiple light sources 10 are provided to emit laser to pass through the multiple light-transmissive portions 32; and the light source 10 may also be an area light source or a line light source, and laser emitted by the area light source or the line light source passes through the multiple light-transmissive portions 32. It is to be understood that the point light source may also be converted to an area light source or a line light source through an optical system.

### Embodiment two

When to-be-soldered devices require light power having different magnitudes, for example, the LED chips 41 generally include a red-light chip 42, a green-light chip 43 and a blue-light chip 44, chips having different colors of light require light powers of different magnitudes. Light power of the light source 10 irradiated on the different light-transmissive portions 32 is consistent, and further since the red-light chip 42 requires lower light power, the red-light chip 42 is apt to be damaged in batch soldering.

In view of this, in this embodiment based on the embodiment one, the multiple light-transmissive portions 32 include multiple light-transmissive sub-portions having different transmittances. Therefore, by providing different transmittances, the magnitudes of power irradiated on the chips are controlled to prevent excessively large power from damaging the chips.

In an embodiment, the multiple light-transmissive sub-portions include a first light-transmissive sub-portion 33, a second light-transmissive sub-portion 34 and a third light-transmissive sub-portion 35. The specific numbers of the first light-transmissive sub-portions 33, the second light-transmissive sub-portions 34 and the third light-transmissive sub-portions 35 may be determined according to actual requirements respectively.

The transmittance of the first light-transmissive sub-portion 33 ranges from 50% to 80%, the transmittance of the second light-transmissive sub-portion 34 ranges from 85% to 95%, and the transmittance of the third light-transmissive sub-portion 35 ranges from 95% to 100%. Those correspond to the red-light chip 42, the green-light chip 43 and the blue-light chip 44 respectively.

In the soldering apparatus provided in this embodiment, the mask 30 having different transmittances is provided, thereby, the magnitude of the light power irradiated on the substrate 40 can be controlled. Therefore, not only the to-be-soldered devices can be soldered in batch but also it can avoid the issue of device damage caused by inconsistent requirements of light power.

### Embodiment three

Based on any one of the preceding embodiments, the surface of the light-shielding portion 31 is provided with a concave-convex structure for reflecting light so that the laser irradiated on the concave-convex structure can be diffused.

### Embodiment four

Based on any one of the preceding embodiments, the soldering apparatus further includes a movable platform 50. The substrate 40 is placed on the movable platform 50. The to-be-soldered devices are disposed on the substrate 40.

Therefore, by adjusting the position of the movable platform 50, the to-be-soldered devices on the substrate 40 can be aligned with the multiple light-transmissive portions 32 respectively to prepare for soldering.

### Embodiment five

This embodiment provides a soldering method using the soldering apparatus provided in embodiment four. As shown in FIG. 4, the method includes the following steps. To-be-soldered devices are aligned with multiple light-transmissive portions 32 of a mask 30 respectively; and laser emitted by a light source 10 is made transmit the multiple light-transmissive portions 32 to solder the to-be-soldered devices in batch.

In an embodiment, the multiple light-transmissive portions 32 include multiple light-transmissive sub-portions having different transmittances. The multiple light-transmissive sub-portions include a first light-transmissive sub-portion 33, a second light-transmissive sub-portion 34 and a third light-transmissive sub-portion 35. The specific numbers of the first light-transmissive sub-portions 33, the second light-transmissive sub-portions 34 and the third light-transmissive sub-portions 35 may be determined according to actual requirements respectively. The transmittance of the first light-transmissive sub-portion 33 ranges from 50% to 80%, the transmittance of the second light-transmissive sub-portion 34 ranges from 85% to 95%, and the transmittance of the third light-transmissive sub-portion 35 ranges from 95% to 100%. The first light-transmissive sub-portion 33, the second light-transmissive sub-portion 34 and the third light-transmissive sub-portion 35 correspond to a red-light chip 42, a green-light chip 43 and a blue-light chip 44 respectively.

In an embodiment, the aligning the to-be-soldered devices with the multiple light-transmissive portions 32 of the mask 30 respectively includes the step below.

The position of a movable platform 50 is adjusted to align the to-be-soldered devices on a substrate 40 with the multiple light-transmissive portions 32 respectively.

In an embodiment, before the to-be-soldered devices are aligned with the multiple light-transmissive portions 32 of the mask 30 respectively, the method further includes a step below.

The position of the movable platform 50 is detected optically and initialized to facilitate the subsequent alignment of the to-be-soldered devices with the light-transmissive portions 32 respectively.

In the soldering method provided in embodiment five, the laser can transmit the multiple light-transmissive portions 32 to solder the to-be-soldered devices in batch, thereby preventing the to-be-soldered devices from being damaged caused by inconsistent requirements of the to-be-soldered devices on light powers, greatly improving the soldering efficiency, therefore, the method is particularly applicable to die-bonding for LED chips in big batch. The method can be combined with the mass transfer in the prior procedure. After the LED chips 41 are transferred to the substrate 42 using mass transfer technology, the soldering method is used to bond the LED chips 41 in batches so that the production efficiency can be improved.

## Claims

1. A soldering apparatus, comprising:
a light source configured to supply light radiation required for soldering; and
a mask disposed on a light path of the light source and comprising a light-shieling portion and a plurality of light-transmissive portions, wherein the plurality of light-transmissive portions are spaced apart by the light-shielding portion and are configured for the light radiation to pass through.

2. The soldering apparatus according to claim 1, wherein the plurality of light-transmissive portions comprise a plurality of light-transmissive sub-portions having different transmittances.

3. The soldering apparatus according to claim 2, wherein the plurality of light-transmissive sub-portions comprises a first light-transmissive sub-portion, a second light-transmissive sub-portion and a third light-transmissive sub-portion; and
a transmittance of the first light-transmissive sub-portion ranges from 50% to 80%, a transmittance of the second light-transmissive sub-portion ranges from 85% to 95%, and a transmittance of the third light-transmissive sub-portion ranges from 95% to 100%.

4. The soldering apparatus according to claim 1, wherein the light source is a line light source or an area light source.

5. The soldering apparatus according to claim 1, further comprising a reflective mirror, wherein light radiation emitted by the light source is reflected to the mask by the reflective mirror.

6. The soldering apparatus according to claim 1, wherein the light-shielding portion is opaque, and a surface of the light-shielding portion is provided with a concave-convex structure for reflecting light.

7. The soldering apparatus according to claim 1, further comprising a movable platform, wherein a substrate is disposed on the movable platform and is configured for placement of to-be-soldered devices.

8. A soldering method, using the soldering apparatus according to any one of claims 1 to 7, comprising:
aligning to-be-soldered devices with the plurality of light-transmissive portions of the mask respectively; and
making light radiation emitted by the light resource transmit the plurality of light-transmissive portions to solder the to-be-soldered devices in batch.

9. The soldering method according to claim 8, wherein the aligning to-be-soldered devices with the plurality of light-transmissive portions of the mask respectively comprising: adjusting a position of a movable platform to align the to-be-soldered devices on a substrate with the plurality of light-transmissive portions respectively.

10. The soldering method according to claim 9, before the aligning to-be-soldered devices with the plurality of light-transmissive portions of the mask respectively, further comprising: detecting optically the position of the movable platform, and initializing the position of the movable platform.
